# EUROPÄISCHE PATENTSCHRIFT

(11) **EP 0 896 265 B1**
(45) Veröffentlichungstag und Bekanntmachung des Hinweises auf die Patenterteilung: **04.02.2004**
(21) Anmeldenummer: 98114043.7
(22) Anmeldetag: 28.07.1998
(51) Int. Cl.: G05B 19/042

(54) **Antriebseinrichtung**
Driving device
Dispositif d'entraînement

(30) Priorität: 08.08.1997 DE 19734342; 16.07.1998 DE 19831931
(43) Veröffentlichungstag der Anmeldung: 10.02.1999
(73) Patentinhaber: Bosch Rexroth AG, 97816 Lohr am Main (DE)
(72) Erfinder: Meister, Werner, 64385 Reichelsheim (DE); Weber, Rupert, 63936 Schneeberg (DE); Pfeiffer, Gabriele, 64297 Darmstadt (DE); Kennel, Ralph, 64711 Erbach (DE); Melzer, Stefan, 64739 Hoechst (DE); Punzet, Alfred, 64711 Erbach (DE); Dickhaut, Ralf, 64756 Mossautal (DE); Melzer, Siegfried, 64739 Hoechst (DE); Witt, Detlef, 64711 Erbach (DE); Kost, Thomas, 63110 Nieder-Roden (DE)
(74) Vertreter: Thürer, Andreas

(56) Entgegenhaltungen:
- EP-A- 0 332 607
- EP-A- 0 572 149
- EP-B- 0 155 403
- EP-B- 0 304 574
- DE-A- 4 440 127

## Beschreibung

### Stand der Technik

Die Erfindung geht aus von einer Antriebseinrichtung nach der Gattung des Hauptanspruchs. Eine bekannte Einrichtung dieser Art (EP 446 733 B1) besteht aus einem Servomotor, dem kaskadisch eine Stromsteuereinrichtung sowie eine Geschwindigkeits- und Positionssteuereinrichtung vorgeschaltet sind. Die Stromsteuereinrichtung besitzt einen Speicher, worin Daten zur Bezeichnung des eingesetzten Stromverstärkers sowie Motornenndaten abgelegt sind. Über eine Kommunikationseinrichtung können die in der Stromsteuereinrichtung vorhandenen Daten einer übergeordneten Steuereinrichtung mitgeteilt werden. Das Konzept ist zweckmäßig, wenn Stromsteuereinrichtungen und Servomotor einander fest zugeordnet sind. Weniger gut geeignet ist es, wenn Stromsteuereinrichtungen häufig anderen Motoren zugeordnet werden. Jedesmal ist eine Anpassung der im Speicher der Stromsteuereinrichtung abgelegten Motornenndaten erforderlich.

Aus der DE 37 44 733 C2 ist eine Stromversorgungseinrichtung mit verschiedenartigen, daran anschließbaren Elektrowerkzeugen bekannt. In einem digitalen Speicher ist eine werkzeugspezifische Codierung eingespeichert. Wenn der Verbindungsstecker in die Steckdose eingesteckt wird, so werden die die Codierung bildenden Daten seriell über die Datenübertragungsleitungen und den I/O-Kreis in die elektronische Steuervorrichtung eingelesen. Über diese Codierung werden beispielsweise Grenzwerte für Parameter wie Drehzahl, Temperatur, Drehmoment, elektrischer Strom, elektrische Spannung oder dergleichen vorgegeben.

Bekannt sind ferner Einbau-Codedrehgeber für Servomotoren (Fa. HEIDENHAIN, Baureihe ERN/ECN/EQN 1300), welche die Möglichkeit bieten, über eine synchronserielle Datenschnittstelle Motorkenndaten einzulesen und auf Anforderung wieder auszugeben. Motoren mit solchen Gebern lassen sich bequem an beliebige Steuerungen anschließen. Allerdings ist im Falle der Notwendigkeit eines Drehgeberaustausches eine Neuprogrammierung des eingetauschten Gebers erforderlich, die zum einen die Kenntnis erfordert, wie der Geber zu programmieren ist, zum anderen der einzugebenden Motorkenndaten. Beides ist in der Praxis nicht immer gewährleistet. Dazu beschränkt sich die Möglichkeit der Ablage von Motorkenndaten auf bestimmte intelligente Inkrementaldrehgeber. Geber einfacherer Bauweise, z. B. magnetische Systeme wie Zahnkranzgeber, sehen eine entsprechende Möglichkeit grundsätzlich nicht vor. Zwar wäre denkbar, sie entsprechend nachzurüsten, jedoch würde dies zu entsprechend höheren Kosten führen.

Aus der EP-A 332 607 ist ein elektronischer Regler für Kraftfahrzeuge mit Brennkraftmaschinen bekannt. Zur Steuerung und Regelung eines Dieselmotors ist ein elektronischer Regler vorgesehen. Als Teil eines elektronischen Regler ist ein Parameterspeicher vorgesehen, der sämtliche für die Regelung erforderlichen motor- und/oder fahrzeugspezifischen Daten und Kennfelder enthält. Ein solcher Parameterspeicher ist, von dem Reglergehäuse völlig getrennt, in der fahrzeugseitigen Steckerleiste der Steckverbindung untergebracht. Die Recheneinrichtung des Reglers könnte beispielsweise über eine serielle Schnittstelle auf den Parameterspeicher zugreifen.

Es ist Aufgabe der vorliegenden Erfindung, eine Antriebseinrichtung anzugeben, welche einfach mit beliebigen Steuerungseinrichtungen kombinierbar und unabhängig vom gewählten Gebertyp ist.

Diese Aufgabe wird gelöst durch eine Antriebseinrichtung mit den kennzeichnenden Merkmalen des Hauptanspruchs. Durch die erfindungsgemäße permanente Ablage der Motorkenndaten in einem im Motorgehäuse vorhandenen Datenspeicher kann der Motor durch selbst mit dessen Technik nicht vertraute Anwender leicht in beliebige Steuerungskonfigurationen integriert werden. Insbesondere die Motorstromversorgung mit der zugehörigen Motorstromregelung kann sich nach Auslesen der Motorkenndaten selbsttätig auf einen Motor abstimmen. Vorteilhaft ist es, dem die Motornenndaten aufnehmenden Speicher einen Mikroprozessor oder einen anwenderspezifischen integrierten Schaltkreis (ASIC) zuzuordnen, welche den Zugriff auf die Motordaten steuern. Die in dem nichtflüchtigen Speicher hinterlegten motorspezifischen Daten werden über einen Datenausgang dem Steuermodul zugeführt. Über denselben Datenausgang in Verbindung mit der zugehörigen Datenleitung wird ebenfalls das Signal eines dem Motor zugeordneten Sensors dem Steuermodul zugeführt. Der für diese Anwendung ohnehin vorhandene Anschluß wird in erfindungsgemäßer Weise auch für die Übertragung der motorspezifischen Daten genutzt. Deshalb weist die Unterbringung des nicht flüchtigen Speichers im Gehäuse des Servomotors dank der einfachen Datenanbindung Vorteile auf.

Nachfolgend wird unter Bezugnahme auf die Zeichnung ein Ausführungsbeispiel der Erfindung näher erläutert.

### Zeichnung

Die Figur zeigt eine Antriebseinrichtung als Blockschaltbild.

### Beschreibung

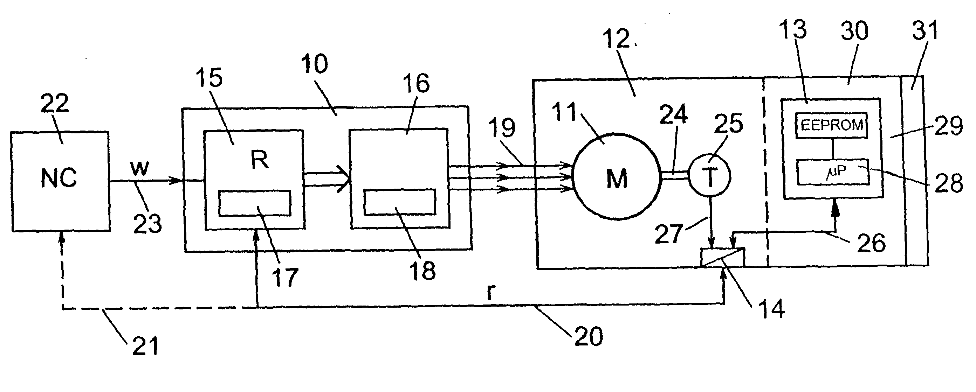

Figur 1 zeigt eine Antriebskonfiguration, wie sie für Anwendungen in Werkzeugmaschinen typisch ist. Sie besteht aus einer übergeordneten numerischen Steuerung 22, welche über eine Datenverbindung 23 einem Steuermodul 10 einen Lage-, Geschwindigkeits- oder Stromsollwert w vorgibt. Im Steuermodul 10 gelangt der Sollwert w in eine Regeleinheit 15, der weiterhin ein die Istlage, die Istgeschwindigkeit oder den Iststrom bezeichnendes Rückführungssignal r zugeführt ist. Entsprechend der Differenz von Sollwert w und Rückführungssignal r steuert die Regeleinheit 15 einen Stromumrichter 16 zur Erzeugung eines Motorstromes. Er wird über entsprechende Zuleitungen 19 einem Servomotor 11 übergeben, welcher entsprechend dem zugeführten Strom eine Welle 24 antreibt. Die sich an der Welle 24 einstellende Lage- und/oder Geschwindigkeit wird von einem Sensor 25 erfaßt und in einen Meßwert umgesetzt, der an einem Datenausgang 14 anliegt. Von dort wird er über eine Leitungsverbindung 20 als Rückführungssignal r auf die Steuereinheit 15 im Steuermodul 10 zurückgeführt. Der Sensor 25 kann sowohl ein intelligenter Inkrementaldrehgeber mit Signalvorauswertung sein als auch ein einfaches magnetisches System. Alternativ zur Lage- bzw. Geschwindigkeitserfassung kann auch eine Erfassung des am Motor 11 anliegenden Stromes erfolgen, diese Alternative ist aus Gründen der Übersichtlichkeit nicht dargestellt. Servomotor 11, Sensor 25 und Datenausgang 14 befinden sich in einem gemeinsamen Gehäuse 12, das in der Regel getrennt von dem Steuermodul 10 angeordnet ist. Das Rückführungssignal r kann außer der Regeleinheit 15 auch der übergeordneten numerischen Steuerung 22 über eine Fortsetzung 21 der Leitungsverbindung 20 zugeführt sein. In diesem Fall kann auch ein Teil der Motorstromregelung in der übergeordneten Steuerung 22 erfolgen, das Steuermodul 10 kann dann entsprechend einfacher ausgebildet sein oder ganz fehlen.

Im Motorgehäuse 12 befindet sich weiterhin ein nicht flüchtiger Speicher 13, welcher beispielsweise als EEPROM ausgeführt ist. Über eine auf den Datenausgang 14 geführte Datenverbindung 26 ist er beschreib- und auslesbar. In dem elektronischen Speicher 13 sind antriebsspezifische Daten abgelegt. Bei Zusammenschaltung mit dem Steuermodul 10 und/oder bei Inbetriebnahme der Anordnung werden die Daten im Speicher 13 vom Steuermodul 10 ausgelesen. Entsprechend den Daten konfigurieren sich dann die Regeleinheit 15 und/oder der Umrichter 16. Die im Speicher 13 abgelegten Motorkenndaten können ferner auch der übergeordneten Steuerung 22 zugeführt werden, damit diese die Sollwertgabe daran anpaßt. In dem nichtflüchtigen Speicher 13 sind auch die Regelparameter für die Regeleinheit 15 hinterlegt. Bei den Regelparametern kann es sich um Werte für den Proportionalanteil, den Integralanteil oder den Differentialanteil eines entsprechenden Reglers handeln. Auch antriebsspezifische Grenzwerte, wie beispielsweise die maximal zulässige Drehzahl, der maximal zulässige Strom usw. und die Art des Antriebs (Synchronmotor oder Asynchronmotor), eine für den Anlauf des Servomotors 11 notwendige Information, sind in dem nichtflüchtigen Speicher 13 fest hinterlegt. Abhängig von dem hinterlegten Typ des Servomotors 11 durchläuft das Steuermodul 10 unterschiedliche Regelprogrammabschnitte. Auch die typische Kennlinie des gewählten Servomotors 11, die beispielsweise den Zusammenhang zwischen Drehmoment und Drehzahl beschreibt, findet sich als Information in dem nichtflüchtigen Speicher 13.

Zur Erfassung der für eine Regelung bzw. Überwachung notwendigen Daten des Servomotors 11 sind Sensoren 25 vorgesehen. Diese erfassen beispielsweise den Strom, die Temperatur, die Position oder die Drehzahl des Servomotors 11. Je nach verwendetem Sensor 25 ist eine diesem Sensor 25 zugeordnete Sensorkennlinie in dem nichtflüchtigen Speicher 13 abgelegt. Wird als Sensor 25 beispielsweise ein NTC-Temperaturfühler verwendet, so ist in dem nichtflüchtigen Speicher 13 ein Parametersatz der die Kennlinie beschreibenden Exponential-Funktion abgespeichert.

Bei jedem Neustart des Servoantriebs 11 werden in einem Initialisierungsschritt die in dem nichtflüchtigen Speicher 13 hinterlegten Daten über die Datenverbindung 26, den Datenausgang 14 und die Datenleitung 20 ausgelesen und der Regeleinheit 15 zugeführt. Im laufenden Betrieb wird die Datenleitung 20 zur Kommunikation zwischen dem Sensor 25 und der Regeleinheit 15 verwendet. Die Datenleitung 20 besteht aus einem Kabel, wobei im Echtzeitbetrieb das Rückführungssignal r des Sensors 25, im Beispiel die Drehzahl des Servomotors 11, an die Regeleinheit 15 übertragen wird. Im Normalbetrieb könnnen der Regeleinheit 15 außerdem Statussignale des Sensors 25, die die Funktionsfähigkeit des Sensors 25 beschreiben, zugeführt werden. Grundsätzlich könnte die Datenleitung 20 auch aus zwei Kabeln gebildet werden, wobei in dem einen Kabel im Echtzeitbetrieb das Rückführungssignal r des Sensors 25, und in dem zweiten die Statussignale des Sensors 25 und die Daten des nichtflüchtigen Speichers 13 übertragen werden. Das zweite Kabel läßt einen bidirektionalen Datenaustausch zwischen dem Steuermodul 10 und der elektronischen Peripherie 28 zu.

Sollte beispielsweise bei der Inbetriebnahme des Servomotors 11 zur Optimierung der Regeleinheit 15 Regelparameter direkt im Steuermodul 10 verändert worden sein, können diese Daten in den nichtflüchtigen Speicher 13 geschrieben werden, so daß sie für den nächsten Anlauf des Servomotors 11 als aktuelle Parameter zur Verfügung stehen.

Als weitere Alternative können in dem nichtflüchtigen Speicher 13 auch prozeßspezifische Daten nichtflüchtig hinterlegt werden. Zu denken wäre hier beispielsweise an eine nicht zu überschreitende Prozeßdrehzahl, die unter der maximal möglichen Motordrehzahl liegt.

Die Übertragung der im Speicher 13 abgelegten Motorkenndaten erfolgt über eine Datenverbindung, welche in Form eines Datenbusses ausgeführt sein kann. Die Daten können dann von allen an den Bus angeschlossenen Teilnehmern ausgelesen werden. Physikalisch realisiert ist die Datenverbindung zweckmäßig über die zur Rückführung der vom Sensor 25 abgegebenen Rückführungssignale r ohnehin vorhandenen Datenleitung 20.

Zur Verwaltung des Datenzugriffs auf den Speicher 13 ist ihm zweckmäßig eine Peripherie zugeordnet, welche beispielsweise einen Mikroprozessor oder einen anwenderspezifischen integrierten Schaltkreis (ASIC) beinhaltet. Speicher 13 und die elektronische Peripherie 28 zu seiner Verwaltung sind zweckmäßig auf einer gemeinsamen Platine 29 angeordnet, welche an einer von außen gut zugänglichen Stelle des Motorgehäuses 12 angeordnet ist. Beispielsweise kann die Platine 29 an der dem Achsaustritt gegenüberliegenden Stirnseite des Motorgehäuses in einer wannenartigen Ausnehmung 30 plaziert sein, welche durch eine Fortsetzung der Längsseiten des Motorgehäuses 12 über den Läuferraum hinaus erzeugt wird. Die offene Stirnseite wird durch eine Kappe 31 abgeschlossen. Durch bedarfsweises Entfernen der Kappe 31 ist die Platine 29 jederzeit leicht zugänglich.

Der Zugriff auf den Speicher 13 kann selbstverständlich auch direkt erfolgen, ohne daß die elektronische Peripherie 28 erforderlich ist.

Zur Verbesserung der Systemflexibilität besitzen zweckmäßig auch die im Steuermodul 10 befindliche Steuereinheit 15 und/oder der Umrichter 16 jeweils eine Speichereinrichtung 17, 18, worin Kenndaten zur Charakterisierung der jeweiligen Einrichtung abgelegt sind. Bei Einrichtung der Antriebsanordnung werden diese Kenndaten den jeweils anderen Elementen über die Datenleitung 20 mitgeteilt. Alle Elemente der Anordnung können so optimal aufeinander abgestimmt werden.

Unter Beibehaltung des Grundgedankens, im Servomotor 11 einen elektronischen Speicher 13 vorzusehen, worin dessen Kenndaten permanent abgelegt sind, ist eine Vielzahl von Variationen des Ausführungsbeispieles möglich. Insbesondere gilt dies für die Realisierung des Speichers 13. So könnte beispielsweise die Datenablage auch optisch geschehen, oder die Anordnung des Speichers 13 innerhalb des Motorgehäuses 12 könnte anders erfolgen. Auch können statt eines einzelnen Datenausganges 14, über den sowohl die auf dem Speicher 13 abgelegten Daten wie auch die vom Sensor 25 gemeldeten Meßwerte übertragen werden, mehrere Datenausgänge vorgesehen sein.

Die Erfindung ist nicht eingeschränkt auf die Verwendung eine Servomotors 11. Beliebige hinlänglich bekannte Aktuatoren können Verwendung finden.

## Patentansprüche

1. Antriebseinrichtung mit einem Servomotor und einem vorgeschalteten Steuermodul zu dessen Stromversorgung, welches den Servomotor auf einen vorgegebenen Lage-, Geschwindigkeits- oder Stromsollwert regelt, wobei im Gehäuse (12) des Servomotors ein Speicher (13) ausgebildet ist, in dem motorspezifische Daten und/oder Daten eines den Istzustand eines Motors (11) erfassenden Sensors (25) abgelegt sind, und das Gehäuse (12) einen Datenausgang (14) aufweist, über den die motorspezifischen Daten auslesbar sind, **dadurch gekennzeichnet, daß** die Übertragung der motorspezifischen Daten und/oder Daten eines den Istzustand des Motors (11) erfassenden Sensors (25) über eine am Datenausgang (14) anliegende Datenleitung (20) erfolgt, über die auch die von dem Sensor (25) gelieferten Rückführungssignale geführt werden.

2. Antriebseinrichtung nach Anspruch 1, **dadurch gekennzeichnet, daß** das Steuermodul (10) eine Regel- und/oder Steuereinheit (15) beinhaltet, welche aufgrund der motorspezifischen Daten und/oder der Daten des den Istzustand des Motors (11) erfassenden Sensors (25) konfigurierbar ist.

3. Antriebseinrichtung nach Anspruch 1, **dadurch gekennzeichnet, daß** das Steuermodul (10) ebenfalls eine Speichereinrichtung (17, 18) mit für das Steuermodul (10) spezifischen Daten aufweist, welche über eine Datenverbindung (20, 21) auslesbar sind.

4. Antriebseinrichtung nach Anspruch 1, **dadurch gekennzeichnet, daß** der Speicher (13) in einer aus dem Motorgehäuse (12) herausgebildeten Ausnehmung (30) angeordnet ist.

5. Antriebseinrichtung nach Anspruch 1, dadurch gekennzeichent, daß dem Speicher (13) eine intelligente Datenverarbeitungseinrichtung (28) zugeordnet ist, die weitere Aufgaben z. B. eine Lage- und/oder Drehzahlregelung oder Teile davon übernimmt.

6. Antriebseinrichtung nach Anspruch 1, **dadurch gekennzeichnet, daß** über den Datenausgang (14) auch motorspezifische Daten und/oder Daten des den Istzustand des Motors (11) erfassenden Sensors (25) in den Speicher (13) einschreibbar sind.

7. Antriebseinrichtung nach Anspruch 1, **dadurch gekennzeichnet, daß** der Speicher (13) ein EEPROM ist.

8. Antriebseinrichtung nach einem der vorhergehenden Ansprüche, **dadurch gekennzeichnet, daß** als von dem Sensor (25) geliefertes Rückführungssignal der Istzustand des Motors (11) verwendet ist.

9. Antriebseinrichtung nach einem der vorhergehenden Ansprüche, **dadurch gekennzeichnet, daß** als Rückführungssignal ein den Zustand des Sensors (25) beschreibendes Signal verwendet ist.

## Claims

1. A drive device having a servomotor and an upstream control module for providing power to the latter, this control module regulating the servomotor to give a predetermined position, speed or current set point value, with a memory (13) constructed in the housing (12) of the servomotor, in which motor-specific data and/or data from a sensor (25) detecting the actual state of a motor (11) is stored, and the housing (12) having a data output (14) by way of which the motor-specific data may be output, wherein the motor-specific data and/or data from a sensor (25) detecting the actual state of the motor (11) is transmitted by way of a data line (20) that is located at the data output (14) and by way of which the return signals supplied from the sensor (25) are also guided.

2. A drive device as claimed in claim 1, wherein the control module (10) contains a regulating and/or control unit (15) that can be configured on the basis of the motor-specific data and/or the data of the sensor (25) detecting the actual state of the motor (11).

3. A drive device as claimed in claim 1, wherein the control module (10). also has a storage device (17, 18) having data that is specific to the control module (10) and may be output by way of a data connection (20, 21).

4. A drive device as claimed in claim 1, wherein the memory (13) is arranged in a recess (30) made in the motor housing (12).

5. A drive device as claimed in claim 1, wherein an intelligent data processing device (28) is associated with the memory (13) and takes on further tasks, such as position and/or speed regulation, or parts thereof.

6. A drive device as claimed in claim 1, wherein motor-specific data and/or data from the sensor (25) detecting the actual state of the motor (11) may be written to the memory (13) by way of the data output (14).

7. A drive device as claimed in claim 1, wherein the memory (13) is an EEPROM.

8. A drive device as claimed in one of the preceding claims, wherein the actual state of the motor (11) is used as the return signal supplied from the sensor (25).

9. A drive device as claimed in one of the preceding claims, wherein a signal describing the state of the sensor (25) is used as the return signal.

## Revendications

1. Système d'entraînement avec un servomoteur et un module de commande intercalé en amont pour l'alimenter en courant et régler le servomoteur sur une valeur théorique pré-spécifiée pour la position, la vitesse ou le courant, le carter (12) du servomoteur contenant une mémoire (13) dans laquelle sont consignées les données spécifiques du moteur et/ou les données d'un capteur (25) qui saisit l'état réel d'un moteur (11) ; le carter (12) présente une sortie (14) permettant d'extraire les données spécifiques du moteur et **caractérisée par le fait que** la transmission de ces données et/ou des données d'un capteur (25) enregistrant l'état réel du moteur (11) se fait par l'intermédiaire d'une ligne de transmission (20) placée sur la sortie (14) et par laquelle passent également les signaux de retour fournis par le capteur (25).

2. Système d'entraînement selon la revendication 1 **caractérisé par le fait que** le module de commande (10) comprend une unité de réglage et/ou de commande (15) qui peut être configurée en fonction des données spécifiques du moteur et/ou des données du capteur (25) qui saisit l'état réel du moteur (11).

3. Système d'entraînement selon la revendication 1 **caractérisé par le fait que** le module de commande (10) présente également un système de mémoire (17 et 18) avec les données spécifiques du module (10) qui peuvent être extraites par l'intermédiaire d'une connexion de données (20 et 21).

4. Système d'entraînement selon la revendication 1 **caractérisé par le fait que** la mémoire (13) est placée dans un creux (30) formé par le carter moteur (12).

5. Système d'entraînement selon la revendication 1 **caractérisé par le fait qu'**il est affecté à la mémoire (13) un dispositif intelligent de traitement des données (28) qui se charge d'autres tâches comme par exemple de régler la position et/ou la vitesse de rotation, intégralement ou en partie.

6. Système d'entraînement selon la revendication 1 **caractérisé par le fait que** la sortie (14) permet également l'inscription dans la mémoire (13) de données spécifiques du moteur et/ou de données du capteur (25), qui saisit l'état réel du moteur (11).

7. Système d'entraînement selon la revendication 1 **caractérisé par le fait que** la mémoire (13) est de type EEPROM.

8. Système d'entraînement selon une des revendications précédentes **caractérisé par le fait que** l'état réel du moteur (11) est employé comme signal de retour fourni par le capteur (25).

9. Système d'entraînement selon une des revendications précédentes **caractérisé par le fait qu'**un signal décrivant l'état du capteur (25) est employé comme signal de retour.
